# EUROPÄISCHE PATENTSCHRIFT

(11) **EP 1 310 050 B1**
(45) Veröffentlichungstag und Bekanntmachung des Hinweises auf die Patenterteilung: **30.09.2009**
(21) Anmeldenummer: 01969224.3
(22) Anmeldetag: 07.08.2001
(51) Int. Cl.: H04B 7/005

(54) **VERFAHREN ZUR REGELUNG DER SENDELEISTUNG IN EINEM FUNKSYSTEM**
METHOD FOR CONTROLLING TRANSMITTING POWER IN A RADIO SYSTEM
PROCEDE DE REGLAGE DE LA PUISSANCE D'EMISSION DANS UN SYSTEME RADIO

(30) Priorität: 17.08.2000 DE 10040227
(43) Veröffentlichungstag der Anmeldung: 14.05.2003
(73) Patentinhaber: SIEMENS AKTIENGESELLSCHAFT, 80333 München (DE)
(72) Erfinder: RAAF, Bernhard, 81475 München (DE); SENNINGER, Christian, 82515 Wolfratshausen (DE)
(86) Internationale Anmeldenummer: PCT/DE2001/003017
(87) Internationale Veröffentlichungsnummer: WO 2002/015430

(56) Entgegenhaltungen:
- EP-A- 0 682 418
- DE-A- 19 821 519
- US-A- 5 991 618

## Beschreibung

Die vorliegende Erfindung betrifft ein Verfahren zur Regelung der Sendeleistung in einem Funksystem, insbesondere einem Mobilfunksystem, nach dem Oberbegriff des Anspruchs 1.

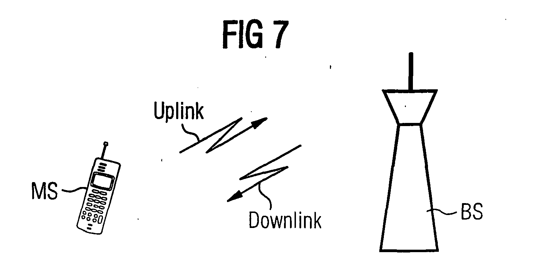

Nachfolgend soll das herkömmliche Verfahren zur Regelung der Sendeleistung in einem Mobilfunksystem unter Bezugnahme auf Figur 7 erläutert werden.

Eine Mobilstation MS, deren Sendeleistung geregelt werden soll, erzeugt ein Pilotsignal mit einem oder mehreren Pilotbits, welches über den sogenannten "Uplink"-Kanal an eine Basisstation BS des Mobilfunksystems übertragen wird. Die Basisstation BS wertet das von der Mobilstation MS empfangene Pilotsignal aus, um davon abhängig das Signal-Interferenz-Verhältnis ("Signal to Interference Ratio", SIR) zu bestimmen und mit einem vorgegebenen Sollwert zu vergleichen. Die Basisstation BS erzeugt abhängig von dem Vergleichsergebnis einen Leistungsregelungsbefehl zur Regelung der Sendeleistung der Mobilstation MS, welcher über den sogenannten "Downlink"-Kanal an die Mobilstation MS übertragen und von dieser entsprechend umgesetzt wird. Der Leistungsregelungsbefehl weist dabei die Mobilstation MS insbesondere an, ihre Sendeleistung gemäß einer bestimmen Schrittweite zu erhöhen oder zu erniedrigen bzw. unverändert zu lassen. Der Leistungsregelungsbefehl kann daher im Prinzip lediglich ein Bit umfassen, welches die Mobilstation MS in Abhängigkeit von seinem Wert anweist, die Sendeleistung der Mobilstation MS zu erhöhen bzw. zu erniedrigen.

Bei der Einstellung ihrer Gesamtsendeleistung muss die Mobilstation MS nicht nur die von der Basisstation BS empfangenen Leistungsregelungsbefehle berücksichtigen, sondern auch als "Gain"-Faktor bezeichnete Gewichtungsparameter, welche die Gewichtung des Sendeleistungsanteils eines dem Uplink-Kanal zugeordneten Steuerkanals ("Dedicated Physical Control Channel", DPCCH) bzw. die Gewichtung des Sendeleistungsanteils eines dem Uplink-Kanal zugeordneten Datenkanals ("Dedicated Physical Data Channel", DPDCH) beschreiben. Jeder physikalische Übertragungskanal ("Dedicated Physical Channel", DPCH) setzt sich aus einem derartigen Steuerkanal, über den unter anderem das zuvor erwähnte Pilotsignal übertragen wird, und keinem, einem oder mehreren Datenkanälen zusammen. Die zuvor beschriebenen "Gain"-Faktoren verändern sich beispielsweise, wenn sich die Datenrate eines Datenkanals oder die Anzahl der Datenkanäle der Mobilstation MS verändert.

Bei der Regelung bzw. Einstellung der Sendeleistung der Mobilstation MS muss eine maximale bzw. minimale Sendeleistungsgrenze beachtet werden. Die Mobilstation MS kann beispielsweise die maximale Sendeleistungsgrenze aufgrund eines Leistungsregelungsbefehls der Basisstation BS, welche eine Erhöhung ihrer Sendeleistung zur Folge hat, oder einer Neueinstellung des zuvor erwähnten "Gain"-Faktors erreichen bzw. überschreiten. Des weiteren kann die Mobilstation MS die minimale Sendeleistungsgrenze aufgrund eines von der Basisstation BS empfangenen Leistungsregelungsbefehls, welcher eine Verringerung der Sendeleistung zur Folge hat, oder einer Neueinstellung der "Gain"-Faktoren, erreichen bzw. unterschreiten. Gemäß dem derzeitigen Stand der Standardisierung von UMTS-Mobilfunksystemen ("Universal Mobile Telecommunication System") kann die maximale Sendeleistung der Mobilstation MS abhängig von der jeweils gewählten Leistungsklasse zwischen 21 dBm und 33 dBm liegen. Insbesondere in Mobilfunksystemen, welche gemäß der sogenannten CDMA-Technologie ("Code Division Multiple Access") betrieben werden, ist es von größter Wichtigkeit, dass die maximale Sendeleistungsgrenze nicht überschritten wird, da dann durch die Mobilstation der Uplink-Kanal von weiteren in derselben Zelle befindlichen Mobilstationen gestört werden würde.

Zur Berücksichtigung der maximalen bzw. minimalen Sendeleistungsgrenze wurde für UMTS-Mobilfunksysteme eine Skalierung der Sendeleistung der Mobilstation MS vorgeschlagen, welche beispielsweise durch eine Begrenzung der Sendeleistung auf die maximale bzw. minimale Sendeleistung oder durch eine Abschwächung einer angeforderten Sendeleistungserhöhung bzw. Sendeleistungserniedrigung realisiert sein kann.

Insbesondere für das Verhalten der Mobilstation MS an der oberen Sendeleistungsgrenze wird vorgeschlagen, die Sendeleistung auf die maximale Sendeleistung zu begrenzen, falls aufgrund eines Leistungsregelungsbefehls der Basisstation BS und/oder veränderter "Gain"-Faktoren eine Sendeleistung angefordert wird, welche die maximale Sendeleistungsgrenze überschreiten würde. D.h., die maximale Sendeleistungsgrenze wird auf keinen Fall überschritten. Wird anschließend beispielsweise aufgrund einer "Gain"-Faktor-Neueinstellung eine Sendeleistungsreduktion angefordert, wird der zu reduzierende Sendeleistungsbetrag von dem Betrag der maximalen Sendeleistung abgezogen und mit dem daraus resultierenden Sendeleistungswert gesendet. Diesbezüglich sei beispielsweise angenommen, dass die Mobilstation MS über einen Übertragungskanal mit einer Sendeleistung sendet, welche 1 dB unterhalb der maximalen Sendeleistung liegt. Soll nun beispielsweise die Datenrate des entsprechenden Datenkanals verdoppelt werden, müsste die Gesamtsendeleistung um ca. 3 dB angehoben werden und läge somit 2 dB über der maximalen Sendeleistung. In diesem Fall wird die Gesamtsendeleistung der Mobilstation MS auf die maximale Sendeleistung begrenzt. Soll nun nach einiger Zeit die Datenrate wieder auf den ursprünglichen Datendurchsatz reduziert werden, wird nach der herkömmlichen Vorgehensweise die daraus resultierende Sendeleistungsreduktion in Bezug auf die maximale Sendeleistung durchgeführt, d.h. die maximale Sendeleistung wird um 3 dB reduziert, und mit der daraus resultierenden Sendeleistung wird gesendet, was jedoch eine um 2 dB zu niedrige Sendeleistung zur Folge hat, welche anschließend durch den zwischen der Mobilstation MS und der Basisstation BS bestehenden Leistungsregelkreis ausgeregelt werden muss.

Ein ähnliches Verfahren tritt gemäß dem Stand der Technik an der minimalen Sendeleistungsgrenze auf, d.h. auch an der minimalen Sendeleistungsgrenze kann bei einer Begrenzung bzw. Skalierung der Sendeleistung mit einer anschließenden Sendeleistungserhöhung aufgrund einer "Gain"-Faktor-Neueinstellung eine Sendeleistung eingestellt werden, welche gegenüber der tatsächlich angeforderten Sendeleistung zu hoch ist und damit nicht der Realität entspricht.

Grundsätzlich ist gemäß dem Stand der Technik der Mobilstation MS das Unterschreiten der minimalen Sendeleistungsgrenze freigestellt. Akzeptiert die Mobilstation MS das Unterschreiten der minimalen Sendeleistungsgrenze nicht, würde bei einer angeforderten Reduktion der Sendeleistung, welche ein Unterschreiten der minimalen Sendeleistungsgrenze zur Folge hat, die Sendeleistung auf die minimale Sendeleistung begrenzt werden. Die Mobilstation MS würde sich somit äquivalent zu den oben beschriebenen Regeln verhalten, welche im Bereich der maximalen Sendeleistungsgrenze gelten, so dass sich ebenfalls das Problem ergibt, dass bei einer nachfolgenden Sendeleistungserhöhung aufgrund einer "Gain"-Faktor-Neueinstellung der entsprechende Differenzbetrag zu dem Wert der minimalen Sendeleistung hinzuaddiert und anschließend mit der daraus resultierenden Sendeleistung gesendet wird.

Für den Fall, dass die Mobilstation MS das Unterschreiten der minimalen Sendeleistungsgrenze unterstützt, ist gemäß dem Stand der Technik eine Skalierung derart vorgesehen, dass die Gesamtsendeleistung nach der Skalierung weder größter als die minimale Sendeleistungsgrenze noch größer als die zuvor eingestellte Gesamtsendeleistung ist, und dass die Größe der Gesamtsendeleistungsreduktion nach dem Anwenden der Skalierung die Größe der Leistungsreduktion vor der zusätzlichen Skalierung nicht überschreitet. Bei einer Erhöhung der Sendeleistung soll hingegen keine Skalierung angewendet werden. Dies bedeutet, dass bei Erreichen bzw. Unterschreiten der minimalen Sendeleistungsgrenze jede angeforderte Sendeleistungsreduktion skaliert und beispielsweise durch Multiplikation mit dem Faktor 1/4 abgeschwächt wird, während jede angeforderte Sendeleistungserhöhung ohne Restriktionen umgesetzt wird.

Sollte die Mobilstation MS das zuvor beschriebene Unterschreiten der minimalen Sendeleistungsgrenze unterstützen, tritt ebenfalls das zuvor erläuterte Problem einer nach Überschreiten der minimalen Sendeleistungsgrenze zu hohen Sendeleistungseinstellung, jedoch in etwas abgeschwächter Art und Weise, auf.

Der vorliegenden Erfindung liegt daher die Aufgabe zugrunde, ein verbessertes Verfahren zu Regelung der Sendeleistung in einem Funksystem vorzuschlagen, wobei die zuvor beschriebenen unerwünschten bzw. unbeabsichtigten Einstellungen der Sendeleistung an der oberen bzw. unteren Sendeleistungsgrenze vermieden werden können.

Diese Aufgabe wird erfindungsgemäß durch ein Verfahren mit den Merkmalen des Anspruchs 1 gelöst. Die Unteransprüche definieren jeweils bevorzugte und vorteilhafte Ausführungsformen der vorliegenden Erfindung.

Erfindungsgemäß wird vorzugsweise kontinuierlich der einem von der Basisstation empfangenen Leistungsregelungsbefehl und dem augenblicklichen Wert der "Gain"-Faktoren tatsächlich entsprechende, unskalierte bzw. unbegrenzte Sendeleistungswert ermittelt und bei der Einstellung der Sendeleistung der Mobilstation berücksichtigt, falls die Veränderung dieses unskalierten Sendeleistungswerts auf eine Veränderung der "Gain"-Faktoren zurückzuführen ist. Dies gilt insbesondere für den Fall, dass aufgrund einer durch die Veränderung der "Gain-"Faktoren angeforderten Sendeleistungsveränderung der maximale Sendeleistungsgrenzwert wieder unterschritten bzw. der minimale Sendeleistungsgrenzwert wieder überschritten wird.

Zur Ermittlung der von dem System tatsächlich angeforderten Sendeleistung kann eine Variable verwendet werden, die einer imaginären Sendeleistungseinstellung entspricht.

Hinsichtlich der maximalen Sendeleistungsgrenze ist erfindungsgemäß weiterhin vorgesehen, die Sendeleistung der Mobilstation auf den maximalen Sendeleistungsgrenzwert zu beschränken. Sollte anschließend aufgrund einer Veränderung der "Gain"-Faktoren eine Reduzierung der Sendeleistung angefordert werden, wird erfindungsgemäß der entsprechende Leistungsdifferenzwert von der imaginären Leistungseinstellung reduziert und mit der daraus resultierenden Leistung gesendet, falls diese kleiner als der maximale Sendeleistungsgrenzwert ist.

Auch bei Begrenzung der Sendeleistung auf den minimalen Sendeleistungsgrenzwert kann bei Anforderung einer Sendeleistungserhöhung durch eine "Gain"-Faktor-Neueinstellung der entsprechende Leistungsdifferenzwert zu dem imaginären Sendeleistungswert hinzuaddiert und mit der daraus resultierenden Sendeleistung gesendet werden, falls diese größer als die minimale Sendeleistungsgrenze ist.

Lässt die Mobilstation hingegen ein Unterschreiten der minimalen Sendeleistungsgrenze mit einer entsprechenden Skalierung zu, empfiehlt es sich, den imaginären Sendeleistungswert bzw. die entsprechende Variable stets der aktuellen Sendeleistung gleichzusetzen.

Die vorliegende Erfindung eignet sich insbesondere zum Einsatz in UMTS-Mobilfunksystemen, wobei jedoch die vorliegende Erfindung allgemein in jedem Funksystem anwendbar ist, wo eine Regelung der Sendeleistung eines Senders herbeigeführt werden soll. Des weiteren wird die Erfindung im Rahmen der vorliegenden Patentanmeldung zur Verdeutlichung anhand des Beispiels der Sendeleistungsregelung der Mobilstation in einem Mobilfunksystem beschrieben. Selbstverständlich ist die vorliegende Erfindung jedoch grundsätzlich auch auf die Regelung der Sendeleistung einer Basisstation anwendbar.

Die vorliegende Erfindung wird nachfolgend näher anhand bevorzugter Ausführungsbeispiele unter Bezugnahme auf die beigefügte Zeichnung erläutert.
Figur 1 - Figur 3 zeigen Darstellungen zur Erläuterung der vorliegenden Erfindung anhand eines ersten Ausführungsbeispiels,
Figur 4 - Figur 6 zeigen Darstellungen zur Erläuterung der vorliegenden Erfindung anhand eines zweiten Ausführungsbeispiels, und
Figur 7 zeigt eine Darstellung zur Erläuterung der Kommunikation zwischen einer Mobilstation und einer Basisstation in einem Mobilfunksystem.

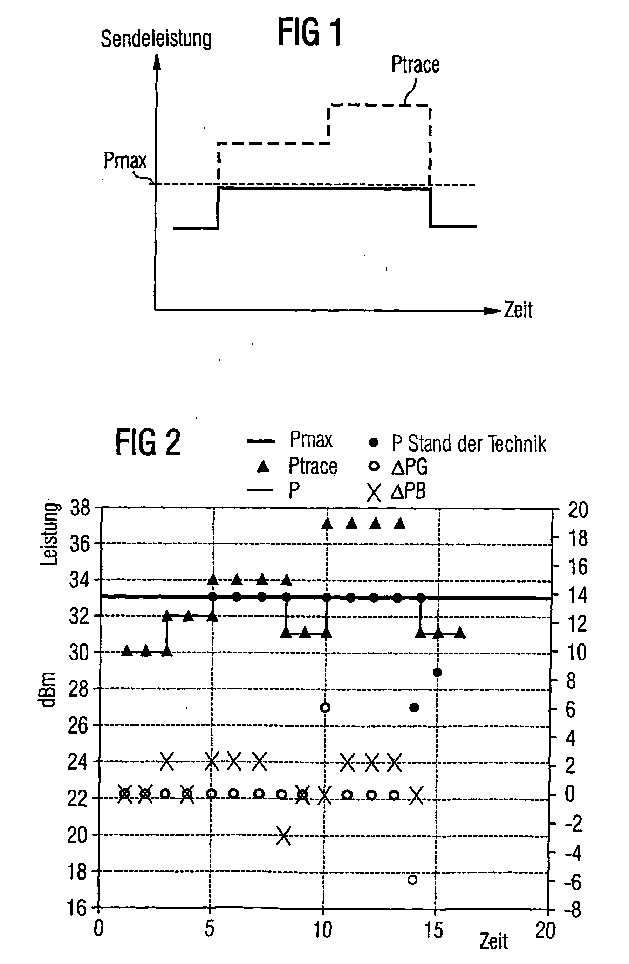

Im Rahmen der vorliegenden Erfindung wird vorgeschlagen, die vom System tatsächlich geforderte Sendeleistung in Form einer Variablen Ptrace zu merken, wobei dies insbesondere diejenige geforderte Sendeleistung betrifft, welche die maximale Sendeleistungsgrenze Pmax überschreitet. Dies soll nachfolgend näher anhand der Darstellung von Figur 1 erläutert werden.

Wie aus Figur 1 ersichtlich ist, wird für den Fall, dass von dem System eine Sendeleistung gefordert wird, welche größer als die maximale Sendeleistungsgrenze Pmax ist, stets mit dem Wert dieser maximalen Sendeleistung Pmax gesendet.

Mit Hilfe der Variablen Ptrace wird kontinuierlich die von dem System geforderte Sendeleistung, insbesondere die von dem System geforderte Sendeleistung, welche die maximale Sendeleistungsgrenze Pmax überschreitet, gemerkt. Überschreitet die vom System geforderte Sendeleistung die maximale Sendeleistungsgrenze Pmax, wird jedoch nicht mit Ptrace gesendet, sondern - wie bereits erwähnt worden ist - mit der maximal erlaubten Sendeleistung Pmax. Solange die Mobilstation MS von der Basisstation Befehle zur Erhöhung der Sendeleistung erhält, wird weiterhin mit der erlaubten maximalen Sendeleistung Pmax gesendet und der Wert der Variable Ptrace bleibt unverändert. Sollte die Mobilstation MS jedoch aufgrund von veränderten "Gain"-Faktoren die Sendeleistung erhöhen wollen, obwohl Ptrace bereits über der maximalen Sendeleistungsgrenze Pmax liegt, soll trotzdem der entsprechende Leistungsdifferenzwert zu Ptrace hinzuaddiert werden, wobei jedoch nach wie vor mit der maximal erlaubten Sendeleistung Pmax gesendet wird.

Erhält die Mobilstation MS von der Basisstation einen Befehl zur Verringerung der Sendeleistung, soll der entsprechende Leistungsdifferenzwert von der erlaubten maximalen Sendeleistung abgezogen und mit dem daraus resultierenden Sendeleistungswert gesendet werden, wie es auch gemäß dem Stand der Technik vorgesehen ist. Sollte die Mobilstation MS jedoch die Sendeleistung aufgrund von veränderten "Gain"-Faktoren verringern wollen, soll der entsprechende Leistungsdifferenzwert von der Variable Ptrace abgezogen und mit dem daraus resultierenden Sendeleistungswert gesendet werden (falls dieser kleiner als der maximale Sendeleistungsgrenzwert ist).

Mit Hilfe der Variablen Ptrace wird somit jede "Gain"-Faktor-Neueinstellung verfolgt.

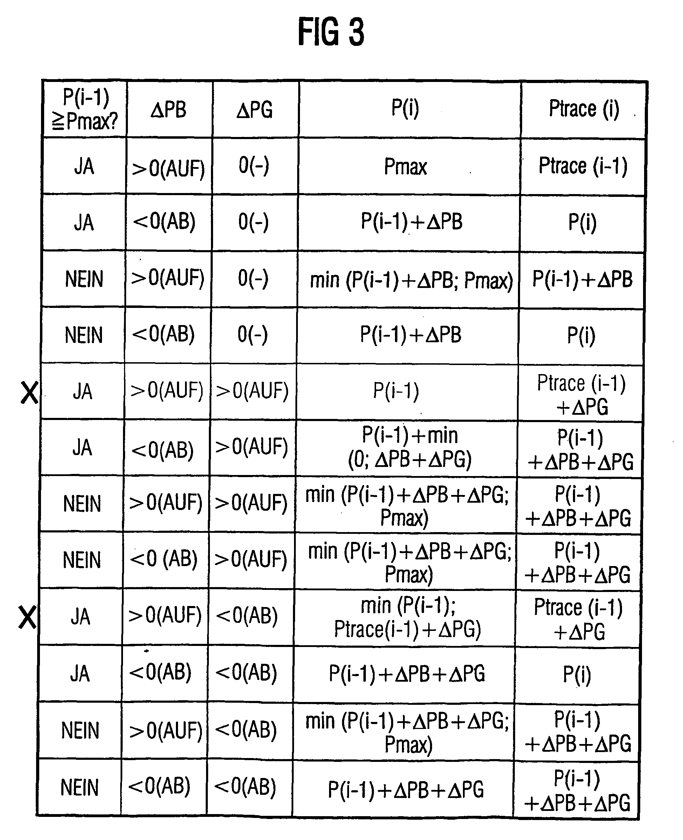

Die gesamte Gesetzmäßigkeit, welche an der oberen Sendeleistungsgrenze Pmax herrschen soll, ist in Figur 3 zusammengefasst. Dabei ist mit P(i) bzw. P(i-1) die Sendeleistung der Mobilstation MS zum Zeitpunkt i bzw. zum vorhergehenden Zeitpunkt bzw. Zeitschlitz i-1 bezeichnet. Analog bezeichnet Ptrace(i) bzw. Ptrace(i-1) den Wert der Variablen Ptrace zum Zeitpunkt i bzw. i-1. Mit ΔPB ist eine angeforderte Gesamtsendeleistungsveränderung der Mobilstation MS bezeichnet, welche auf einen von der Basisstation BS empfangenen Leistungsregelungsbefehl zurückgeht. Entsprechend ist durch ΔPG eine Gesamtsendeleistungsveränderung der Mobilstation MS bezeichnet, welche auf eine Neueinstellung der "Gain"-Faktoren zurückgeht. Gerade die mit einem Kreuz markierten Zeilen von Figur 3 spiegeln den Vorteil der vorliegenden Erfindung wider. Dabei ist aus Figur 3 ersichtlich, dass für den Fall einer bereits erfolgten Begrenzung auf den Wert der maximalen Sendeleistung Pmax die Variable Ptrace bei Vorliegen einer Sendeleistungsänderung aufgrund einer "Gain"-Faktor-Neueinstellung kontinuierlich angepasst und insbesondere bei einer Sendeleistungsreduktion in Folge einer "Gain-"-Faktor-Neueinstellung (APB=0) die Sendeleistung auf den aktuellen Wert der Variablen Ptrace bzw. auf den vorhergehenden Wert der Sendeleistung (d.h. auf Pmax) eingestellt wird, je nachdem welcher Wert kleiner ist.

Mit Hilfe der vorliegenden Erfindung kann somit an der maximalen Sendeleistungsgrenze Pmax die Einstellung einer zu geringen Sendeleistung bei Vorliegen einer Anforderung zur Verringerung der Sendeleistung aufgrund einer "Gain-"-Faktor-Neueinstellung verhindert werden.

Dies ist auch aus der Darstellung von Figur 2 ersichtlich, wobei beispielhaft die Einstellung der Sendeleistung unter Anwendung der vorliegenden Erfindung im Bereich der maximalen Sendeleistungsgrenze Pmax dargestellt ist. Mit schwarzen Dreiecken ist der Verlauf der Variablen Ptrace dargestellt, während mit schwarzen Kreisen der Verlauf der Sendeleistung gemäß dem herkömmlichen Verfahren angedeutet ist. Des weiteren ist mit weißen Kreisen der jeweilige Wert der Systemanforderung zur Veränderung der Sendeleistung aufgrund einer "Gain"-Faktor-Neueinstellung, d.h. ΔPG, dargestellt. Des weiteren ist mit einem Kreuz eine Sendeleistungsänderung bezeichnet, welche auf einen von der Mobilstation MS empfangenen Befehl zurückgeht. Die sich bei Anwendung des erfindungsgemäßen Verfahrens ergebende Einstellung der Sendeleistung P ist mit einer durchgezogenen Linie angedeutet.

Wie aus Figur 2 ersichtlich ist, bringt die vorliegende Erfindung bis zum Zeitpunkt t = 14 keine Änderung mit sich. Genau zum Zeitpunkt t = 14 soll aufgrund einer veränderten "Gain"-Faktor-Neueinstellung die Sendeleistung geändert werden, beispielsweise weil zum Zeitpunkt t = 10 die vierfache Datenrate übertragen werden sollte, welche dann zum Zeitpunkt t = 14 wieder auf den ursprünglichen Wert absinkt. Gemäß dem Stand der Technik wäre die daraus resultierende Sendeleistungsdifferenz von 6 dB zum Zeitpunkt t = 14 von dem Betrag des maximalen Sendeleistungsgrenzwerts Pmax = 33 dBm abgezogen worden, so dass anschließend mit einer zu niedrigen Leistung gesendet worden wäre, welche durch die nachfolgende Leistungsregelung wieder auf den korrekten Wert zurückgegangen wäre. Mit Hilfe der vorliegenden Erfindung wird jedoch der aus den veränderten "Gain"-Faktoren resultierende Leistungsdifferenzwert von der Variablen Ptrace reduziert und die Sendeleistung zum Zeitpunkt t = 14 auf den daraus resultierenden Wert von Ptrace eingestellt, so dass mit Hilfe der vorliegenden Erfindung sofort der korrekte Sendeleistungswert bzw. der wahrscheinlichste Sendeleistungswert eingestellt werden kann.

Sollte die Mobilstation MS ein Unterschreiten der minimalen Sendeleistungsgrenze Pmin nicht zulassen, wird ähnlich zu dem zuvor beschriebenen Fall an der maximalen Sendeleistungsgrenze die Variable Ptrace mitgeführt, um anschließend bei einer Sendeleistungserhöhung aufgrund von veränderten "Gain"-Faktoren optimal den entsprechenden Leistungsdifferenzwert zu Ptrace hinzuzuaddieren und die Sendeleistung auf den daraus resultierenden Wert von Ptrace einstellen zu können. Auch in diesem Fall soll gelten, dass mit der Variablen Ptrace lediglich Anforderungen zur Veränderung der Sendeleistung verfolgt werden, welche auf eine veränderte Einstellung der "Gain"-Faktoren zurückgehen, d.h. von der Mobilstation empfangene Befehle zur Veränderung der Sendeleistung, welche auf SIR-Messungen zurückgehen, werden in der Variablen Ptrace nicht berücksichtigt, solange mit minimaler Leistung gesendet wird. Ist die Sendeleistung der Mobilstation MS bereits auf den Wert der minimalen Sendeleistungsgrenze Pmin beschränkt und empfängt die Mobilstation MS von der Basisstation BS einen Befehl zur Erhöhung der Sendeleistung, soll der entsprechende Leistungsdifferenzwert analog zum Stand der Technik zu dem Wert der minimalen Sendeleistungsgrenze Pmin hinzuaddiert und die Sendeleistung der Mobilstation entsprechend eingestellt werden. Sollte hingegen eine Anforderung des Systems zur Sendeleistungserhöhung aufgrund von veränderten "Gain"-Faktoren vorliegen, wird der entsprechende Leistungsdifferenzwert zu dem Wert der Variablen Ptrace hinzuaddiert und die Sendeleistung des Systems entsprechend eingestellt (sofern die Sendeleistung größer als der Wert der minimalen Sendeleistungsgrenze Pmin ist). Sollte die Mobilstation MS die Sendeleistung aufgrund von veränderten "Gain"-Fäktoren verändern wollen, obwohl Ptrace bereits unterhalb der minimalen Sendeleistungsgrenze Pmin ist, soll trotzdem der entsprechende Leistungsdifferenzwert auf Ptrace addiert werden, um die Variablen Ptrace entsprechend anzupassen.

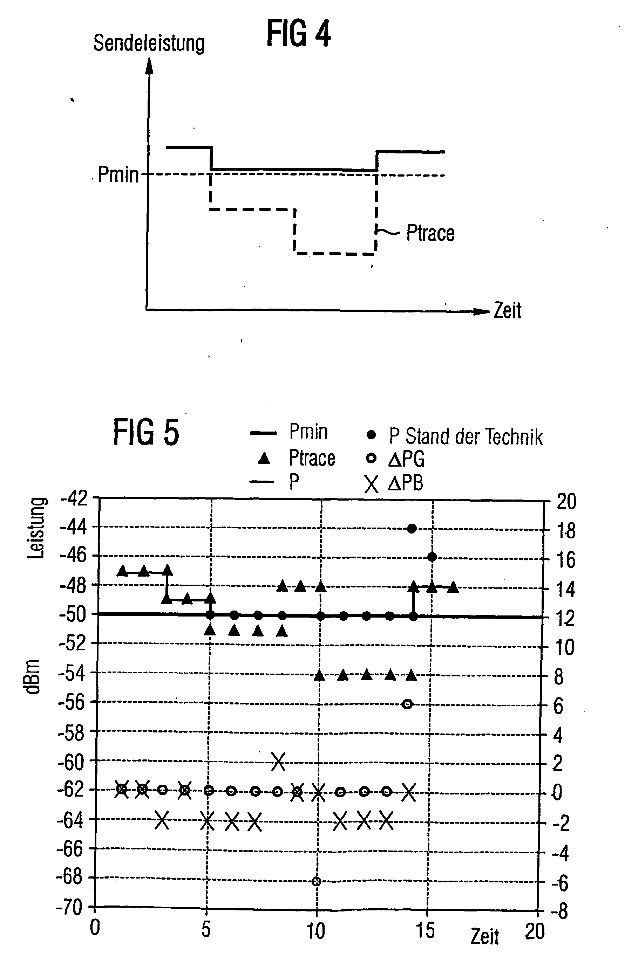

Die Darstellung von Figur 4 verdeutlicht den zuvor beschriebenen Sachverhalt an der minimalen Sendeleistungsgrenze Pmin analog zur Darstellung von Figur 1. Wie aus Figur 4 ersichtlich ist, wird mit der Variablen Ptrace jede "Gain"-Faktor-Neueinstellung während einer bereits erfolgten Begrenzung auf den Wert der minimalen Sendeleistungsgrenze Pmin verfolgt.

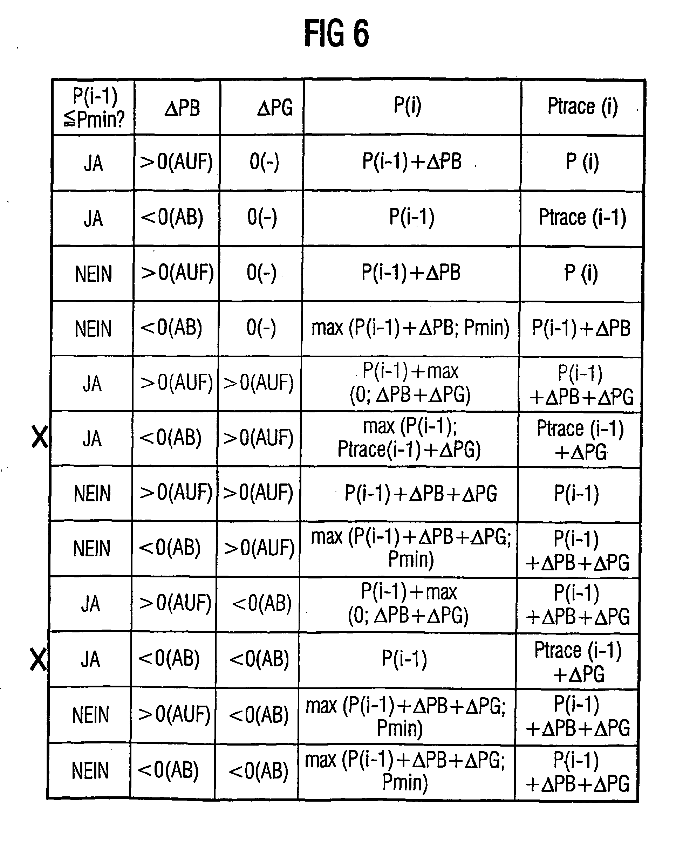

In Figur 6 ist analog zu Figur 3 die gesamte Gesetzmäßigkeit an der minimalen Sendeleistungsgrenze Pmin zusammengefasst, wobei wiederum die mit einem Kreuz gekennzeichneten Zeilen die Vorteile der vorliegenden Erfindung widerspiegeln.

Des weiteren ist in Figur 5 analog zu Figur 2 ein möglicher Verlauf der Sendeleistung P bei Anwendung des erfindungsgemäßen Verfahrens im Bereich der minimalen Sendeleistungsgrenze Pmin dargestellt. Die Symbole besitzen dabei dieselbe Bedeutung wie in Figur 2. Wie aus Figur 5 ersichtlich ist, würde die Mobilstation MS zum Zeitpunkt t = 14 bei einer Anforderung zur Erhöhung der Sendeleistung aufgrund von veränderten "Gain"-Faktoren mit einer zu hohen Sendeleistung senden, während mit Hilfe der erfindungsgemäßen Variablen Ptrace die Sendeleistung zum Zeitpunkt t = 14 sofort auf den richtigen Wert eingestellt werden kann.

Die Darstellungen von Figur 4 - Figur 6 gelten für den Fall, dass die Mobilstation MS ein Unterschreiten der minimalen Sendeleistungsgrenze Pmin analog zum Fall der maximalen Sendeleistungsgrenze Pmax nicht zulässt. Sollte die Mobilstation MS jedoch ein Unterschreiten der minimalen Sendeleistungsgrenze Pmin entsprechend den von der Basisstation BS empfangenen Leistungsregelungsbefehlen einschließlich einer entsprechenden Skalierung dieser Leistungsregelungsbefehle zulassen, sind mehrere Verfahren denkbar:
Vereinfacht könnte stets die Variable Ptrace gleich der tatsächlichen (skalierten) Sendeleistung der Mobilstation gesetzt werden. Dadurch würde zwar das eingangs beschriebene Problem einer unbeabsichtigten Sendeleistungseinstellung nach Verlassen der minimalen Sendeleistungsgrenze Pmin nicht gelöst werden, das Problem würde jedoch in diesem Fall auch nur in abgeschwächter Art und Weise bestehen.

Des weiteren könnte sinngemäß die Variable Ptrace zum Nachführen der Sendeleistungsänderung aufgrund von "Gain"-Faktor-Neueinstellungen äquivalent zu Figur 1 und Figur 4 verwendet werden. Dies hätte jedoch entsprechend kompliziertere Gesetzmäßigkeiten als in den in Figur 3 und Figur 4 gezeigten Fällen zur Folge. Zudem gäbe es eine Vielzahl von Methoden, diese Gesetzmäßigkeit zu definieren.

Die einfachste Lösung, insbesondere für den UMTS-Mobilfunkstandard, wäre es, die Variable Ptrace stets der aktuellen Sendeleistung der Mobilstation MS gleichzusetzen, was eine dem eingangs beschriebenen Stand der Technik entsprechende Vorgehensweise darstellen würde.

## Patentansprüche

1. Verfahren zur Regelung der Sendeleistung in einem Funksystem,
a) wobei von einem Sender (MS) ein Sendesignal über einen Übertragungskanal gesendet wird,
b) wobei von einem Empfänger (BS) das Sendesignal des Senders (MS) empfangen und ausgewertet wird, um davon abhängig einen Leistungsregelungsbefehl zur Regelung der Senderleistung des Senders (MS) zu erzeugen und an den Sender (MS) zu übertragen, und
c) wobei die Sendeleistung des Senders (MS) unter Berücksichtigung eines empfangenen Leistungsregelungsbefehls und eines augenblicklichen Wert mindestens eines Parameters, welcher das Verhältnis von einem Sendeleistungsanteil eines dem Übertragungskanal zugeordneten Steuerkanals und einem Sendeleistungsanteil von dem Übertragungskanal zugeordneten Datenkanälen beschreibt, eingestellt wird, wobei die Sendeleistung des Senders (MS) bei Erreichen bzw. Überschreiten eines maximalen Grenzwerts (Pmax) oder
Erreichen bzw. Unterschreiten eines minimalen Grenzwerts (Pmin) gemäß einem bestimmten Skalierungsverfahren skaliert wird,
**dadurch gekennzeichnet ,**
**dass** bei Erreichen bzw. Überschreiten des maximalen Grenzwerts (Pmax) oder Erreichen bzw. Unterschreiten des minimalen Grenzwerts (Pmin) der einer Veränderung des Parameters tatsächlich entsprechende, unskalierte Sendeleistungswert (Ptrace) ermittelt wird, und
**dass** der unskalierte Sendeleistungswert (Ptrace) bei der Einstellung der Sendeleistung des Senders (MS) im Schritt c) berücksichtigt wird, falls infolge einer Veränderung des Parameters der maximale Grenzwert (Pmax) wieder unterschritten bzw. der minimale Grenzwert (Pmin) wieder überschritten wird.

2. Verfahren nach Anspruch 1,
**dadurch gekennzeichnet,**
**dass** im Schritt c) die Sendeleistung des Senders (MS) auf den unskalierten Sendeleistungswert (Ptrace) eingestellt wird falls infolge einer Veränderung des Parameters der maximale Grenzwert (Pmax) wieder unterschritten bzw. der minimale Grenzwert (Pmin) wieder überschritten wird.

3. Verfahren nach Anspruch 1 oder 2,
**dadurch gekennzeichnet ,**
**dass** im Schritt c) die Sendeleistung des Senders (MS) auf den maximalen Grenzwert (Pmax) begrenzt wird, und
**dass** für den Fall, dass die Sendeleistung des Senders (MS) infolge einer Veränderung des Parameters weiter erhöht werden soll, der unskalierte Sendeleistungswert (Ptrace) entsprechend erhöht wird, die Sendeleistung des Senders (MS) jedoch weiterhin auf den maximalen Grenzwert (Pmax) begrenzt wird.

4. Verfahren nach einem der Ansprüche 1-3,
**dadurch gekennzeichnet,**
**dass** im Schritt c) die Sendeleistung des Senders (MS) auf den maximalen Grenzwert (Pmax) begrenzt wird, und
**dass** für den Fall, dass die Sendeleistung des Senders (MS) infolge einer Veränderung des Parameters verringert werden soll, der unskalierte Sendeleistungswert (Ptrace) entsprechend reduziert wird und die Sendeleistung des Senders MS) auf den Minimalwert des maximalen Grenzwerts (Pmax) und des somit aktualisierten unskalierten Sendeleistungswerts (Ptrace) eingestellt wird.

5. Verfahren nach einem der vorhergehenden Ansprüche,
**dadurch gekennzeichnet,**
**dass** im Schritt c) die Sendeleistung des Senders (MS) auf den minimalen Grenzwert (Pmin) begrenzt wird, und
**dass** für den Fall, dass die Sendeleistung des Senders (MS) infolge einer Veränderung des Parameters weiter reduziert werden soll, der unskalierte Sendeleistungswert (Ptrace) entsprechend reduziert wird und die Sendeleistung des Senders (MS) weiterhin auf den minimalen Grenzwert (Pmin) eingestellt wird.

6. Verfahren nach einem der vorhergehenden Ansprüche,
**dadurch gekennzeichnet ,**
**dass** im Schritt c) die Sendeleistung des Senders (MS) auf den minimalen Grenzwert (Pmin) begrenzt wird, und
**dass** für den Fall, dass die Sendeleistung des Senders (MS) infolge einer Veränderung des Parameters erhöht werden soll, der unskalierte Sendeleistungswert (Ptrace) entsprechend erhöht wird und die Sendeleistung des Senders (MS) auf den Maximalwert des minimalen Grenzwerts (Pmin) und des somit aktualisierten unskalierten Sendeleistungswerts (Ptrace) eingestellt wird.

7. Verfahren nach einem der vorhergehenden Ansprüche,
**dadurch gekennzeichnet ,**
**dass** das Funksystem ein Mobilfunksystem, insbesondere ein UMTS-Mobilfunksystem, ist.

8. Verfahren nach einem der vorhergehenden Ansprüche,
**dadurch gekennzeichnet,**
**dass** der mindestens eine Parameter ein Gewichtungsparameter ist, welcher die Gewichtung des Sendeleistungsanteils des dem Übertragungskanal zugeordneten Steuerkanals oder die Gewichtung des Sendeleistungsanteils der dem Übertragungskanal zugeordneten Datenkanäle beschreibt.

9. Sendevorrichtung für ein Funksystem,
wobei die Sendevorrichtung (MS) derart ausgestaltet ist, dass Leistungsregelungsbefehle zur Regelung der eigenen Sendeleistung von einer weiteren Sendevorrichtung (BS) empfangen und die eigene Sendeleistung in Abhängigkeit von einem empfangenen Leistungsregelungsbefehl und dem augenblicklichen Wert mindestens eines Parameters, welcher das Verhältnis von einem Sendeleistungsanteil eines einem Übertragungskanal der Sendevorrichtung (BS) zugeordneten Steuerkanals und einem Sendeleistungsanteil von dem Übertragungskanals zugeordneten Datenkanälen beschreibt, eingestellt wird, wobei die Sendevorrichtung (MS) die Sendeleistung bei Erreichen bzw. Überschreiten eines vorgegebenen maximalen Grenzwerts (Pmax) oder bei Erreichen bzw. Unterschreiten eines vorgegebenen minimalen Grenzwerts (Pmin) gemäß einem bestimmten Skalierungsverfahren skaliert,
**dadurch gekennzeichnet ,**
**dass** die Sendevorrichtung zur Durchführung des Verfahrens nach einem der Ansprüche 1-8 ausgestaltet ist.

## Claims

1. Method for regulating the transmission power in a radio communications system,
a) wherein a transmission signal is sent by a transmitter (MS) via a transmission channel,
b) wherein the transmission signal from the transmitter (MS) is received and evaluated by a receiver (BS), in order, as a function thereof, to generate a power regulation command for regulating the transmission power of the transmitter (MS) and to send it to the transmitter (MS), and
c) wherein the transmission power of the transmitter (MS) is set, taking into account a received power regulation command and an instantaneous value of at least one parameter, which describes the relationship between a transmission power portion of a control channel assigned to the transmission channel and a transmission power portion of data channels assigned to the transmission channel, wherein the transmission power of the transmitter (MS) is scaled on reaching or exceeding a maximum limit value (Pmax) or reaching or undershooting a minimum limit value (Pmin) in accordance with a particular scaling procedure,
**characterised in that**
on reaching or exceeding the maximum limit value (Pmax) or reaching or undershooting the minimum limit value (Pmin) the unscaled transmission power value (Ptrace) that actually corresponds to a change in the parameter is determined, and that the unscaled transmission power value (Ptrace) is taken into account when setting the transmission power of the transmitter (MS) in step c), if in consequence of a change in the parameter the maximum limit value (Pmax) is again undershot or the minimum limit value (Pmin) is again exceeded.

2. Method according to claim 1,
**characterised in that**
in step c) the transmission power of the transmitter (MS) is set to the unscaled transmission power value (Ptrace), if in consequence of a change in the parameter the maximum limit value (Pmax) is again undershot or the minimum limit value (Pmin) is again exceeded.

3. Method according to claim 1 or 2,
**characterised in that**
in step c) the transmission power of the transmitter (MS) is limited to the maximum limit value (Pmax), and
that in the event that the transmission power of the transmitter (MS) should be further increased in consequence of a change in the parameter, the unscaled transmission power value (Ptrace) is correspondingly increased, but the transmission power of the transmitter (MS) is still limited to the maximum limit value (Pmax).

4. Method according to one of claims 1-3,
**characterised in that**
in step c) the transmission power of the transmitter (MS) is limited to the maximum limit value (Pmax), and
that in the event that the transmission power of the transmitter (MS) should be decreased in consequence of a change in the parameter, the unscaled transmission power value (Ptrace) is correspondingly reduced and the transmission power of the transmitter (MS) is set to the minimum value of the maximum limit value (Pmax) and of the thereby updated unscaled transmission power value (Ptrace).

5. Method according to one of the preceding claims,
**characterised in that**
in step c) the transmission power of the transmitter (MS) is limited to the minimum limit value (Pmin), and
that in the event that the transmission power of the transmitter (MS) should be further reduced in consequence of a change in the parameter, the unscaled transmission power value (Ptrace) is correspondingly reduced and the transmission power of the transmitter (MS) is still set to the minimum limit value (Pmin).

6. Method according to one of the preceding claims,
**characterised in that**
in step c) the transmission power of the transmitter (MS) is limited to the minimum limit value (Pmin), and
that in the event that the transmission power of the transmitter (MS) should be increased in consequence of a change in the parameter, the unscaled transmission power value (Ptrace) is correspondingly increased and the transmission power of the transmitter (MS) is set to the maximum value of the minimum limit value (Pmin) and of the thereby updated unscaled transmission power value (Ptrace).

7. Method according to one of the preceding claims,
**characterised in that**
the radio communications system is a mobile radio communications system, in particular a UMTS mobile radio communications system.

8. Method according to one of the preceding claims,
**characterised in that**
the at least one parameter is a weighting parameter which describes the weighting of the transmission power portion of the control channel assigned to the transmission channel or the weighting of the transmission power portion of the data channels assigned to the transmission channel.

9. Transmission apparatus for a radio communications system, wherein the transmission apparatus (MS) is designed such that power regulation commands for regulating the intrinsic transmission power are received from a further transmission apparatus (BS) and the intrinsic transmission power is set as a function of a received transmission regulation command and the instantaneous value of at least one parameter which describes the relationship between a transmission power portion of a control channel assigned to a transmission channel of the transmission apparatus (BS) and a transmission power portion of data channels assigned to the transmission channel, wherein the transmission apparatus (MS) scales the transmission power on reaching or exceeding a predetermined maximum limit value (Pmax) or on reaching or undershooting a predetermined minimum limit value (Pmin) in accordance with a particular scaling procedure,
**characterised in that**
the transmission apparatus is designed to execute the method according to one of claims 1-8.

## Revendications

1. Procédé de réglage de la puissance d'émission dans un système radio,
a) un signal d'émission étant émis par un émetteur (MS) sur un canal de transmission,
b) le signal d'émission de l'émetteur (MS) étant reçu et évalué par un récepteur (BS) pour, en fonction de cela, produire un ordre de réglage de puissance pour régler la puissance d'émission de l'émetteur (MS) et le transmettre à l'émetteur (MS), et
c) la puissance d'émission de l'émetteur (MS) étant réglée compte tenu d'un ordre de réglage de puissance reçu et d'une valeur instantanée d'au moins un paramètre qui décrit le rapport entre une fraction de puissance d'émission d'un canal de contrôle associé au canal de transmission et une fraction de puissance d'émission des canaux de données associés au canal de transmission, la puissance d'émission de l'émetteur (MS) étant graduée, selon un procédé de graduation déterminé, à l'obtention resp. au dépassement par le haut d'une valeur limite maximale (Pmax) ou à l'obtention resp. au dépassement par le bas d'une valeur limite minimale (Pmin),
**caractérisé en ce que**
à l'obtention resp. au dépassement par le haut de la valeur limite maximale (Pmax) ou à l'obtention resp. au dépassement par le bas de la valeur limite minimale (Pmin), la valeur de puissance d'émission non graduée (Ptrace) correspondant effectivement à une modification du paramètre est déterminée et
la valeur de puissance d'émission non graduée (Ptrace) est prise en considération lors du réglage de la puissance d'émission de l'émetteur (MS) à l'étape c) si, à la suite d'une modification du paramètre, la valeur limite maximale (Pmax) est de nouveau dépassée par le bas resp. la valeur limite minimale (Pmin) est de nouveau dépassée par le haut.

2. Procédé selon la revendication 1, **caractérisé en ce que**, à l'étape c), la puissance d'émission de l'émetteur (MS) est réglée sur la valeur de puissance d'émission non graduée (Ptrace) si, à la suite d'une modification du paramètre, la valeur limite maximale (Pmax) est de nouveau dépassée par le bas resp. la valeur limite minimale (Pmin) est de nouveau dépassée par le haut.

3. Procédé selon la revendication 1 ou 2, **caractérisé en ce que**, à l'étape c), la puissance d'émission de l'émetteur (MS) est limitée à la valeur limite maximale (Pmax) et, dans le cas où la puissance d'émission de l'émetteur (MS) doit encore être augmentée à la suite d'une modification du paramètre, la valeur de puissance d'émission non graduée (Ptrace) est augmentée en conséquence, mais la puissance d'émission de l'émetteur (MS) continue d'être limitée à la valeur limite maximale (Pmax).

4. Procédé selon l'une des revendications 1 à 3, **caractérisé en ce que**, à l'étape c), la puissance d'émission de l'émetteur (MS) est limitée à la valeur limite maximale (Pmax) et, dans le cas où la puissance d'émission de l'émetteur (MS) doit être réduite à la suite d'une modification du paramètre, la valeur de puissance d'émission non graduée (Ptrace) est réduite en conséquence et la puissance d'émission de l'émetteur (MS) est réglée sur la valeur minimale de la valeur limite maximale (Pmax) et de la valeur de puissance d'émission non graduée (Ptrace) ainsi actualisée.

5. Procédé selon l'une des revendications précédentes, **caractérisé en ce que**, à l'étape c), la puissance d'émission de l'émetteur (MS) est limitée à la valeur limite minimale (Pmin) et, dans le cas où la puissance d'émission de l'émetteur (MS) doit encore être réduite à la suite d'une modification du paramètre, la valeur de puissance d'émission non graduée (Ptrace) est réduite en conséquence et la puissance d'émission de l'émetteur (MS) continue d'être réglée sur la valeur limite minimale (Pmin).

6. Procédé selon l'une des revendications précédentes, **caractérisé en ce que**, à l'étape c), la puissance d'émission de l'émetteur (MS) est limitée à la valeur limite minimale (Pmin) et, dans le cas où la puissance d'émission de l'émetteur (MS) doit encore être augmentée à la suite d'une modification du paramètre, la valeur de puissance d'émission non graduée (Ptrace) est augmentée en conséquence et la puissance d'émission de l'émetteur (MS) est réglée sur la valeur maximale de la valeur limite minimale (Pmin) et de la valeur de puissance d'émission non graduée (Ptrace) ainsi actualisée.

7. Procédé selon l'une des revendications précédentes, **caractérisé en ce que** le système radio est un système radio mobile, en particulier un système radio mobile UMTS.

8. Procédé selon l'une des revendications précédentes, **caractérisé en ce que** l'au moins un paramètre est un paramètre de pondération qui décrit la pondération de la fraction de la puissance d'émission du canal de contrôle associé au canal de transmission ou la pondération de la fraction de la puissance d'émission des canaux de données associés au canal de transmission.

9. Dispositif émetteur pour un système radio, le dispositif émetteur (MS) étant réalisé de manière telle que des ordres de réglage de puissance pour régler la propre puissance d'émission sont reçus par un autre dispositif émetteur (BS) et la propre puissance d'émission est réglée en fonction d'un ordre de réglage de puissance reçu et de la valeur instantanée d'au moins un paramètre qui décrit le rapport entre une fraction de puissance d'émission d'un canal de contrôle associé à un canal de transmission du dispositif émetteur (BS) et une fraction de puissance d'émission de canaux de données associés au canal de transmission, le dispositif émetteur (MS) graduant la puissance d'émission, selon un procédé de graduation déterminé, à l'obtention resp. au dépassement par le haut d'une valeur limite maximale prédéterminée (Pmax) ou à l'obtention resp. au dépassement par le bas d'une valeur limite minimale prédéterminée (Pmin),
**caractérisé en ce que**
le dispositif émetteur est réalisé pour exécuter le procédé selon l'une des revendications 1 à 8.
